Europäisches Patentamt

European Patent Office

Office européen des brevets

(11) Veröffentlichungsnummer: **0 384 003**
A2

(12) **EUROPÄISCHE PATENTANMELDUNG**

(21) Anmeldenummer: 89118466.5

(51) Int. Cl.⁵: **F16L 33/00**

(22) Anmeldetag: 05.10.89

(30) Priorität: 18.02.89 DE 3904996

(43) Veröffentlichungstag der Anmeldung:
29.08.90 Patentblatt 90/35

(84) Benannte Vertragsstaaten:
DE ES FR GB IT

(71) Anmelder: **Firma Carl Freudenberg**
**Höhnerweg 2-4**
**D-6940 Weinheim/Bergstrasse(DE)**

(72) Erfinder: **Hempel, Jürgen, Dr.**
**Beethovenstrasse 6**
**D-6940 Weinheim(DE)**

(54) **Schlauchverbindung.**

(57) Eine Schlauchverbindung umfaßt eine Einschubtülle (1) aus einem Hartwerkstoff, die in die Mündung eines Schlauches (2) einfügbar und im Bereich des axial vorstehenden Endes mit einem radial nach außen vorstehenden Haltekragen (3) und einem Anschlußgewinde (4) versehen ist, wobei ein Halteelement (5) radial außerhalb des von dem Schlauch (2) umschlossenen Bereiches vorgesehen ist, das den Schlauch hülsenförmig umschließt und das mit der Einschubtülle (1) im Bereich des Haltekragens (3) flüssigkeitsdicht verbunden ist. Die Einschubtülle (1) ist in dem Bereich zwischen dem Haltekragen (3) und dem Anschlußgewinde (4) mit einer umlaufenden Nut (6) versehen und das Halteelement (5) mit einem in die Nut (6) eingreifenden Ansatz. Es besteht aus einem polymeren Werkstoff, der in flüssigem Zustand an den Schlauch (2) und die Einschubtülle (1) angeformt und anschließend verfestigt ist.

EP 0 384 003 A2

## Schlauchverbindung

Die Erfindung betrifft einen Schlauchverbinder nach dem Oberbegriff von Anspruch 1.

Ein solcher Schlauchverbinder ist bekannt. Er gelangt in Verbindung mit Hydraulik- und Bremsschläuchen zur Anwendung, und das Halteelement besteht einstückig aus metallischem Werkstoff. Es ist im Bereich des einen Endes mit einer axial in das Profil eingreifenden, umlaufenden Nut versehen, in welche das festzulegende Ende des Schlauches zunächst nur lose eingefügt wird. Im Anschluß daran wird der den eingefügten Schlauchabschnitt außenseitig umgreifende Teil der Einschubtülle in einen axialen Abstand voneinander aufweisenden Flächenbereichen ringförmig in seinem Durchmesser vermindert, wobei sich eine flüssigkeitsdichte und mechanisch feste Verbindung zu dem Schlauch ergibt. Die Herstellung der Schlauchtülle ist indessen kompliziert und teuer, was wenig befriedigend ist. Auch zeigen sich an ihrem Außenumfang häufig Korrosionserscheinungen.

Der Erfindung liegt die Aufgabe zugrunde, einen solchen Schlauchverbinder derart weiter zu entwickeln, daß sich bei einfacher Herstellbarkeit eine Verminderung der Anfälligkeit gegen Korrosionsschäden ergibt.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Schlauchverbinder ist es vorgesehen, daß die Einschubtülle in dem Bereich zwischen dem Haltekragen und dem Anschlußgewinde mit einer umlaufenden Nut versehen ist, daß das Halteelement mit einem in die Nut eingreifenden Ansatz versehen ist und aus polymeren Werkstoff besteht und daß der polymere Werkstoff in flüssigem Zustand an den Schlauch und die Einschubtülle angeformt und anschließend verfestigt ist.

Die Einschubtülle kann in üblicher Weise aus einem metallischen Werkstoff erzeugt sein, beispielsweise unter Zuhilfenahme eines Drehautomaten. Für die Festlegung des Schlauches sind keine in ihr Profil in axialer Richtung eingreifende Eindrehungen erforderlich, was die Herstellung stark vereinfacht.

Die Einschubtülle kann im Hinblick auf die Vermeidung von Korrosionsschäden mit einer durchgehenden Korrosionsschutzbeschichtung an ihrer Oberfläche versehen sein. Sie erfährt während der Anfügung des Schlauches eine plastische Veränderung ihrer Gestalt. Die Gefahr einer Beschädigung der Korrosionsschutzbeschichtung und von Korrosionsschäden während des Gebrauchs der Einschubtülle ist dadurch eliminiert.

Die Nut kann an sich jedes Profil haben, das eine formschlüssige Festlegung des Halteelementes gewährleistet. Dieses kann aus folgendem Grund im Anschluß an seine Formgebung und Verfestigung nicht mehr zerstörungsfrei entnommen werden, was zugleich eine Kontrolle der erzielten Verbindung zu der Einschubtülle erübrigt:

Es ist erfindungsgemäß vorgesehen, den das Halteelement bildenden, polymeren Werkstoff in flüssigem Zustand an den Schlauch und die Einschubtülle zusammenhängend anzuformen und zu verfestigen. Der polymere Werkstoff vermag dadurch während seiner Anformung in feinste Oberflächenunregelmäßigkeiten der Einschubtülle und des Schlauches einzudringen und auf diese Weise in eine feste Verbindung zu denselben zu treten. Wird der Werkstoff während seiner Verfestigung einer Abkühlung unterworfen, dann resultieren Schrumpfspannungen in dem Halteelement, welche eine feste gegenseitige Verpressung des Schlauches zwischen der in radialer Richtung unnachgiebigen Einschubtülle und dem Halteelement bedingen. Die mechanische Festlegung des Schlauches wird hierdurch wesentlich verbessert. Ergänzend hierzu kommt eine adhäsive Festlegung des Schlauches an der Einschubtülle. Diese setzt lediglich die Verwendung eines polymeren Werkstoffes voraus, der seiner Art nach geeignet ist, während der im flüssigen Zustand erfolgenden Aufbringung mit der Einschubtülle und dem Schlauch zu verkleben.

Das Halteelement kann in Anwendungsfällen, in denen eine hohe Dauerbelastung zu erwarten ist, aus einem chemisch vernetzten Werkstoff bestehen, beispielsweise aus einem Duro- oder elastomeren Werkstoff. Geeignet sind beispielsweise Polyurethane, Epoxidharze, Phenolharze, Elastomere und Thermoplaste.

Elastomere Werkstoffe werden im allgemeinen bevorzugt. Sie zeichnen sich bei kostengünstiger Verfügbarkeit durch eine leichte Verarbeitbarkeit und eine gute Dauerhaftigkeit aus.

Die mechanische Widerstandsfähigkeit des erfindungsgemäßen Schlauchverbinders läßt sich wesentlich vergrößern durch Einbettung einer Armierung in das Halteelement. Diese kann hülsenförmig gestaltet sein und sich nahezu über die gesamte Länge des Halteelementes erstrecken. Sie umfaßt zweckmäßig sowohl umfangsgerichtete als auch längsgerichtete Armierungselemente, welche mechanisch oder adhäsiv aneinander festgelegt sind. Die Verwendung von offenmaschigen Geweben, Gewirken oder Vliesstoffen aus metallischen und/oder textilen Fäden hat sich besonders bewährt.

Folgende Werkstoffkombinationen erwiesen sich als vorteilhaft, wobei die Schlauchdecke mit dem Halteelement ohne Haftvermittler verbunden ist, während die Verbindung der Armierung über einen Haftvermittler erfolgen muß, insbesondere, wenn diese nur aus Metall besteht:

| Schlauchdecke | Halteelement | Armierung |
|---|---|---|
| TPU (weich) | TPU (hart) | Metall |
| SBR | PPE | Metall/Phenolharz |
| EPDM | PPE | - " - |
| NBR | Phenolharz | - " - |
| FPM | Phenolharz | - " - |
| EPDM | EPDM | Metall |
| EPDM | Polypropylen | Metall/Phenolharz |
| TPU: Thermoplastisches Polyurethan<br>SBR: Butadien-Styrol-Kautschuk<br>EPDM: Ethylen-Propylen-Dien-Kautschuk<br>NBR: Nitrilkautschuk<br>FPM: Fluorkautschuk ("FKM")<br>PPE: Poly-2,6-dimethyl-1,4-phenylenether, ein<br>Thermoplast, z.B. erhältlich unter dem Markennamen<br>VESTORAN[R], Firma Hüls AG | | |

Das Halteelement kann außenseitig von einer Fläche begrenzt sein, die unter Vermeidung einer sprunghaften Richtungsänderung in die axial anschließenden Oberflächen des Schlauches und/oder der Einschubtülle ausläuft. Der Entstehung von Kerbeffekten im Bereich der Übergangszone wird hierdurch vorgebeugt.

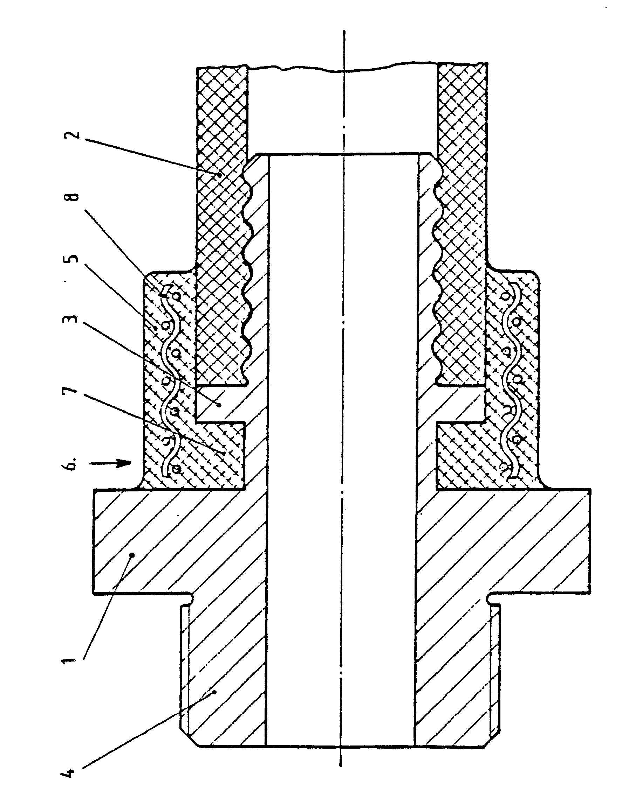

Eine beispielhafte Ausführung des erfindungsgemäßen Schlauchverbinders ist in der Zeichnung längsgeschnitten dargestellt. Sie wird nachfolgend näher erläutert:

Der Schlauchverbinder besteht aus der Einschubtülle 1, welche aus metallischem Werkstoff besteht, der an der Oberfläche mit einer Korrosionsschutzbeschichtung versehen ist.

Auf das verjüngte Ende der Einschubtülle 1 ist der anzuschließende Schlauch 2 aufgeschoben. Er besteht aus dem Elastomer EPDM und ist mit einer in seine Wandung eingebetteten Gewebearmierung versehen. Das stirnseitige Ende des Schlauches 2 liegt an dem Haltekragen 3 an, der in radialer Richtung nach außen vorspringt und einen Außendurchmesser hat, der mit demjenigen des Schlauches 2 im wesentlichen übereinstimmt.

Das Halteelement 5 besteht aus dem Thermoplast PPE, welcher in flüssigem Zustand und unter Verwendung eines Formwerkzeuges an die Einschubtülle 1 und den Schlauch 2 in der dargestellten Weise angeformt und anschließend verfestigt ist. In axialer Richtung läuft die Oberfläche des Halteelementes 5 beiderseits abgerundet in die angrenzenden Oberflächen der Einschubtülle 1 und des Schlauches 2 aus. Kerbwirkungen im Bereich der Übergangszonen sind hierdurch vermieden.

Das Halteelement 5 liegt fest haftend an den von ihm berührten Flächen der Einschubtülle 1 und des Schlauches 2 an. Zusätzlich wird von ihm der Haltekragen der Einschubtülle mit dem die umlaufenden Nut 6 vollständig ausfüllenden Ansatz 7 hintergriffen, was eine formschlüssige Verbindung zu der Einschubtülle 1 bedingt.

Des weiteren ist in den zylindrisch ausgebildeten Teil des Halteelementes 5 eine Armierung 8 eingebettet, welche ebenfalls im wesentlichen zylindrisch gestaltet ist. Sie besteht aus einem Drahtgitter, welches von dem das Halteelement bildenden Werkstoff ganz durchdrungen ist. Die Erstreckung der Armierung 8 in axialer Richtung stimmt im wesentlichen mit derjenigen des Halteelementes 5 überein.

## Ansprüche

1. Schlauchverbindung, umfassend eine Einschubtülle aus einem Hartwerkstoff, die in die Mündung eines Schlauches einfügbar und im Bereich des axial vorstehenden Endes mit einem radial nach außen vorstehenden Haltekragen und einem Anschlußgewinde versehen ist, wobei ein Halteelement radial außerhalb des von dem Schlauch umschlossenen Bereiches vorgesehen ist, das den Schlauch hülsenförmig umschließt und das mit der Einschubtülle im Bereich des Haltekragens flüssigkeitsdicht verbunden ist, dadurch gekennzeichnet, daß die Einschubtülle (1) in dem Bereich zwischen dem Haltekragen (3) und dem Anschlußgewinde (4) mit einer umlaufenden Nut (6) versehen ist, daß das Halteelement (5) mit einem in die Nut (6) eingreifenden Ansatz (7) versehen ist und aus polymeren Werkstoff besteht und daß der polymere Werkstoff in flüssigem Zustand an den Schlauch (2) und die Einschubtülle (1) angeformt und anschließend verfestigt ist.

2. Schlauchverbindung nach Anspruch 1, dadurch gekennzeichnet, daß der Werkstoff mit den von ihm benetzten Flächen des Schlauches (2) und der Einschubtülle (1) verklebt ist.

3. Schlauchverbindung nach Anspruch 1 bis 2, dadurch gekennzeichnet, daß der Werkstoff chemisch vernetzt ist.

4. Schlauchverbindung nach Anspruch 1 bis 3, dadurch gekennzeichnet, daß das Halteelement (5) nachgiebig gestaltet ist.

5. Schlauchverbindung nach Anspruch 1 bis 4, dadurch gekennzeichnet, daß die Nut (6) durch den Ansatz (7) vollständig ausgefüllt ist.

6. Schlauchverbindung nach Anspruch 1 bis 5, dadurch gekennzeichnet, daß das Halteelement (5) außenseitig durch eine Fläche begrenzt ist, die unter Vermeidung einer sprunghaften Richtungsänderung in die freiliegenden Oberflächen des Schlauches (2) und/oder der Einschubtülle (1) ausläuft.